# EUROPÄISCHE PATENTSCHRIFT

(11) **EP 2 505 898 B1**
(45) Veröffentlichungstag und Bekanntmachung des Hinweises auf die Patenterteilung: **05.06.2013**
(21) Anmeldenummer: 12002253.8
(22) Anmeldetag: 28.03.2012
(51) Int. Cl.: F16L 33/22, F16L 37/00

(54) **Anschlussvorichtung für eine Fluidleitung**
Connection device for a fluid conduit
Dispositif de liaison pour une conduite de fluide

(30) Priorität: 01.04.2011 DE 102011015782
(43) Veröffentlichungstag der Anmeldung: 03.10.2012
(73) Patentinhaber: Festo AG & Co. KG, 73734 Esslingen (DE)
(72) Erfinder: Nitsche, Sebastian, 73734 Esslingen (DE); Schulz, Winfried, 73765 Neuhausen (DE); Dawidowski, Alexander, 71139 Ehningen (DE)
(74) Vertreter: Abel, Martin

(56) Entgegenhaltungen:
- EP-A1- 1 172 567
- FR-A- 1 436 806
- GB-A- 451 119

## Beschreibung

Die Erfindung betrifft eine Anschlussvorrichtung für eine Fluidleitung, mit mindestens einer Anschlusseinheit, die einen Grundkörper aufweist, der axial von einem einenends an einem rückseitigen Befestigungsabschnitt und andernends an einem vorderseitigen Anschlussabschnitt ausmündenden Durchgangskanal durchsetzt ist, wobei der Befestigungsabschnitt ausgebildet ist, um in einer Gebrauchsstellung des Grundkörpers in eine Befestigungsöffnung eines bezüglich der Anschlusseinheit gesonderten Trägerbauteils einzugreifen und in dieser Befestigungsöffnung befestigt zu sein und wobei der Anschlussabschnitt zum Anstecken einer anzuschließenden und mit dem Durchgangskanal zu verbindenden Fluidleitung ausgebildet ist, wobei die Anschlusseinheit ferner eine Überwurfmutter aufweist, die koaxial derart auf den Grundkörper aufschraubbar ist, dass sie eine eine an dem Anschlussabschnitt angesteckte Fluidleitung beaufschlagende Klemmkraft hervorruft.

Eine aus der DE 36 28 543 A1 oder der GB 451 119 bekannte Anschlussvorrichtung dieser Art verfügt über eine Anschlusseinheit, die an einem mit fluidischem Druckmedium zu versorgenden Trägerbauteil befestigbar ist und an die im Rahmen einer Steckmontage eine insbesondere von einem Schlauch gebildete Fluidleitung anschließbar ist. Der Grundkörper weist einen Befestigungsabschnitt auf, mit dem er zur Einnahme einer Gebrauchsstellung in eine Befestigungsöffnung des Trägerbauteils einschraubbar ist. Zur Fixierung der angesteckten Fluidleitung verfügt die Anschlusseinheit über eine auf den Grundkörper aufgeschraubte Überwurfmutter, die sich in eine Klemmstellung schrauben lässt, in der sie eine ein Festhalten der angesteckten Fluidleitung bewirkende Klemmkraft hervorruft. Zwar lässt sich mit einer solchen Anschlussvorrichtung eine anzuschließende Fluidleitung sicher fixieren. Gleichwohl bestehen Unzulänglichkeiten, die vor allem einem Einsatz in reinigungsintensiver Umgebung entgegenstehen.

In besonderen Anwendungsbereichen, beispielsweise in der Lebensmittelindustrie oder auf den Gebieten der Medizintechnik und der Pharmazie, ist es aus Gründen der Hygiene erforderlich, die verwendeten Apparaturen regelmäßig zu reinigen. Hierbei werden teilweise Reinigungsmaßnahmen mit unter hohem Druck und unter hohen Temperaturen stehenden Sprühstrahlen eingesetzt. Auch aggressive Medien kommen zur Anwendung. Somit sollte auch eine Anschlussvorrichtung derart gestaltet sein, dass sie durch die Reinigungsmaßnahmen nicht in Mitleidenschaft gezogen wird. Diesem Anspruch wird die aus der DE 36 28 543 A1 bekannte Anschlussvorrichtung nicht gerecht. Bei dieser Anschlussvorrichtung besteht zudem die Problematik, dass eine große Anzahl von Schmutzkanten und Spalten vorhanden ist, an oder in denen sich Verunreinigungen ablagern können, die sich selbst bei gründlicher Reinigung ohne Zerlegung der Anschlussvorrichtung nicht gänzlich entfernen lassen.

Der Erfindung liegt die Aufgabe zugrunde, eine reinigungsfreundliche, durch Reinigungsmaßnahmen in ihrer Funktion kaum zu beeinträchtigende Anschlussvorrichtung zu schaffen.

Zur Lösung dieser Aufgabe ist bei einer Anschlussvorrichtung der eingangs genannten Art der dem Befestigungsabschnitt des Grundkörpers zugewandte hintere Endabschnitt der Überwurfmutter als Abdichtabschnitt ausgebildet, wobei die Überwurfmutter auf dem die Gebrauchsstellung einnehmenden Grundkörper in eine kombinierte Klemm- und Abdichtstellung schraubbar ist, in der sie zum einen die Klemmkraft bezüglich der angesteckten Fluidleitung hervorruft und zum anderen mit ihrem Abdichtabschnitt unter gleichzeitiger abdichtender Beaufschlagung eines an einer die Befestigungsöffnung umrahmenden Außenfläche des Trägerbauteils anliegenden Dichtungsringes der Anschlussvorrichtung mit dieser Außenfläche verspannt ist.

Auf diese Weise lässt sich der in ein Trägerbauteil eingeschraubte Grundkörper durch die Überwurfmutter optimal abschirmen, so dass er eventuellen Reinigungsmaßnahmen nicht direkt ausgesetzt ist. Die in die Klemm- und Abdichtstellung auf den Grundkörper aufgeschraubte Überwurfmutter erstreckt sich bis in den Bereich der sich anschließenden Außenfläche des Trägerbauteils und kooperiert mittels ihres endseitigen Abdichtabschnittes unter Abdichtung mit einem Dichtungsring, der seinerseits dichtend an der Außenfläche des Trägerbauteils anliegt. Auf diese Weise ist eine dichte Verbindung zwischen der Überwurfmutter und dem Trägerbauteil herstellbar, was einem Eindringen von Schmutz oder sonstigen Verunreinigungen, auch flüssiger Art, entgegenwirkt. Dementsprechend lässt sich die Anschlussvorrichtung zur Einhaltung selbst hoher Hygieneanforderungen problemlos reinigen. Durch die Abschirmwirkung der Überwurfmutter wird zudem einem Eindringen aggressiver Reinigungsmedien vorgebeugt, was dauerhaft eine korrekte Funktionsfähigkeit der Anschlussvorrichtung gewährleistet.

Auch in ihrer äußeren Gestaltung kann die Überwurfmutter unter fertigungstechnischen Gesichtspunkten so gestaltet werden, dass sie sehr reinigungsfreundlich ist. In den Übergangsbereichen zwischen Längenabschnitten eventuell unterschiedlicher Außendurchmesser kann sie mit Rundungen und Radien versehen werden, die eine Ablagerung von Schmutz erschweren.

Die Anschlussvorrichtung eignet sich besonders zum Anschließen von Fluidleitungen mit gummielastischen Eigenschaften, also insbesondere von Fluidschläuchen. Prinzipiell können aber auch Fluidleitungen aus harten Materialien mittels der Anschlussvorrichtung angeschlossen werden.

Vorteilhafte Weiterbildungen der Erfindung gehen aus den Unteransprüchen hervor.

Es ist von Vorteil, wenn der Abdichtabschnitt der Überwurfmutter so ausgebildet ist, dass er radial außen, also im Bereich des Außenumfanges des Dichtungsringes, in axialer Richtung an dem Dichtungsring vorbeigreift, wenn die Überwurfmutter die Klemm- und Abdichtstellung einnimmt. Die Überwurfmutter kann dann mit der Stirnfläche ihres Abdichtabschnittes rings um den Grundkörper herum direkt an der die Befestigungsöffnung umschließenden Außenfläche des Trägerbauteils anliegen. Dies hat den Vorteil, dass nicht nur der Grundkörper, sondern auch der Dichtungsring im Bereich seines Außenumfanges durch die Überwurfmutter verdeckt und abgeschirmt wird. Die Überwurfmutter kann zweckmäßigerweise bis "auf Block" mit der Außenfläche des Trägerbauteils festgezogen werden, so dass zwischen dem Abdichtabschnitt der Überwurfmutter und dem Trägerbauteil kein ein Eindringen von Verunreinigungen begünstigender Zwischenraum verbleibt. Zudem ist durch den Dichtungsring der Übergangsbereich zwischen dem Abdichtabschnitt und dem Trägerbauteil abgedichtet. Der Dichtungsring kann insbesondere von radial innen her am Innenumfang der Überwurfmutter anliegen und somit von innen her abdichten. Von außen her ist im Übergangsbereich zwischen der Überwurfmutter und dem Trägerbauteil nur eine Übergangslinie zu sehen, die durch den Dichtungsring von innen her abgedichtet ist. Durch die Abstützung des Abdichtabschnittes an der Außenfläche des Trägerbauteils kann auch in vorteilhafter Weise verhindert werden, dass ein eventuell zumindest partiell zwischen den Abdichtabschnitt und das Trägerbauteil eingreifender Dichtungsring beim Anziehen der Überwurfmutter nicht zerquetscht wird.

Besonders vorteilhaft ist es, wenn der Abdichtabschnitt der Überwurfmutter an seinem Innenumfang eine konzentrisch angeordnete, sowohl nach radial innen als auch zur Stirnfläche des Abdichtabschnittes hin offene ringförmige Ausnehmung aufweist, die sich besonders einfach und vorteilhaft in Form einer eine konische Fläche aufweisenden Fase bzw. Anfasung realisieren lässt. In diese Ausnehmung taucht der Dichtungsring mit zumindest einem Teil seines Volumens unter Vorspannung und Abdichtung ein, wenn die Überwurfmutter stirnseitig mit der Außenfläche des Trägerbauteils verspannt wird. Der Dichtungsring hat zweckmäßigerweise einen Außendurchmesser, der größer ist als der Innendurchmesser der Überwurfmutter in dem sich axial an die ringförmige Ausnehmung anschließenden Bereich. Dadurch wird der Dichtungsring beim Festziehen der Überwurfmutter axial zwischen der Überwurfmutter und der Außenfläche des Trägerbauteils unter Abdichtung zusammengedrückt. Durch die ringförmige Ausnehmung wird der Dichtungsring quasi gefasst. Die ringförmige Ausnehmung ist insbesondere so ausgelegt, dass sie den größten Außendurchmesser des Dichtungsringes fassen kann und den Dichtungsring beim Anziehen der Überwurfmutter nach radial innen leitet. Durch diesen Vorgang wird der Dichtungsring beim Anziehen der Überwurfmutter zwischen der Überwurfmutter und dem Grundkörper unter Entfaltung der gewünschten Dichtwirkung zusammengedrückt. Folglich ist der Dichtungsring in der Lage, den innerhalb der Überwurfmutter liegenden Bereich der Anschlussvorrichtung zuverlässig gegen die Umgebung hin abzudichten und flüssige und feste Verunreinigungen fernzuhalten.

Wenn die Überwurfmutter bei in Gebrauchsstellung befindlichem Grundkörper in die Klemm- und Abdichtstellung aufgeschraubt ist, ist der Dichtungsring zweckmäßigerweise zwischen dem Abdichtabschnitt und dem Grundkörper unter Abdichtung insbesondere radial verspannt. Außerdem wird der Dichtungsring zweckmäßigerweise durch die ihn beaufschlagende Überwurfmutter unter Abdichtung axial gegen die Außenfläche des Trägerbauteils angedrückt. Der Dichtungsring dichtet also zweckmäßigerweise gleichzeitig gegen mehrere Komponenten der Anschlussvorrichtung ab, nämlich gegen den Grundkörper, gegen die Überwurfmutter und gegen das Trägerbauteil.

Der Grundkörper verfügt axial im Anschluss an den Befestigungsabschnitt, in Richtung zu dem vorne angeordneten Anschlussabschnitt hin, zweckmäßigerweise über einen Hauptabschnitt mit bezüglich des Befestigungsabschnittes größerem Außendurchmesser. Auf diese Weise verfügt der Grundkörper über eine Ringstufe zwischen dem Befestigungsabschnitt und dem Hauptabschnitt. Die dem Befestigungsabschnitt zugewandte ringförmige Stirnfläche des Hauptabschnittes fungiert dabei zweckmäßigerweise als Dichtfläche, die - wenn der Grundkörper unter Einnahme der Gebrauchsstellung in der Befestigungsöffnung fixiert ist - einer Außenfläche des Trägerbauteils gegenüberliegt, wobei zwischen dieser Außenfläche und der Dichtfläche des Hauptabschnittes ein Dichtungsring der Anschlussvorrichtung angeordnet ist, der die Verbindung zwischen dem Grundkörper und dem Trägerbauteil fluiddicht abdichtet.

Der vorgenannte Dichtungsring kann eine eigenständige Komponente sein, die von dem mit dem Abdichtabschnitt der Überwurfmutter kooperierenden Dichtungsring unabhängig ist. Mithin könnte die Anschlussvorrichtung also über zwei Dichtungsringe verfügen, von denen einer hauptsächlich zur Abdichtung zwischen dem Grundkörper und dem Trägerbauteil dient und der andere hauptsächlich zur Abdichtung zwischen der Überwurfmutter und dem Trägerbauteil. Als vorteilhafter wird es jedoch angesehen, die vorgenannten Abdichtfunktionen mittels lediglich eines einzigen Dichtungsringes zu realisieren. Hier ist dann mit anderen Worten der in der Klemm- und Abdichtstellung der Überwurfmutter dichtend mit deren Abdichtabschnitt zusammenarbeitende Dichtungsring mit demjenigen Dichtungsring identisch, der zwischen der Dichtfläche des Hauptabschnittes und der Außenfläche des Trägerbauteils angeordnet ist. Auf diese Weise ergibt sich eine minimale Anzahl von Bauteilen und auch die Montage der Anschlusseinheit am zugeordneten Trägerbauteil geht sehr einfach vonstatten.

Der vorgenannte einzige Dichtungsring ist zweckmäßigerweise so ausgebildet, dass er den sich an den Befestigungsabschnitt anschließenden Hauptabschnitt des Grundkörpers radial außen überragt. Auf diese Weise kann er optimal mit dem stirnseitig an der Überwurfmutter angeordneten Abdichtabschnitt kooperieren.

Es wäre möglich, den Befestigungsabschnitt beispielsweise als Einpressabschnitt auszubilden, der im Rahmen einer Einpressmontage in einer Befestigungsöffnung eines Trägerbauteils befestigt werden kann. Als zweckmäßiger, vor allem auch deshalb, weil in der Regel bei Bedarf dadurch auch eine Demontagemöglichkeit gewährleistet werden kann, wird eine Ausgestaltung angesehen, bei der der Befestigungsabschnitt als Gewindeabschnitt ausgebildet ist, welcher über ein Außengewinde verfügt, mit dem er sich in ein Innengewinde der Befestigungsöffnung einschrauben lässt. Zweckmäßigerweise weist der Grundkörper in dem sich an den Gewindeabschnitt anschließenden Längenabschnitt zumindest partiell einen Außenumfang mit Mehrkantkontur auf, der als Werkzeugangriffsabschnitt nutzbar ist, an dem sich ein Schraubwerkzeug ansetzen lässt, um den Grundkörper im Rahmen seiner Einschraubbefestigung mit dem Trägerbauteil zu verspannen.

Der Grundkörper verfügt an seinem Außenumfang zweckmäßigerweise über ein Außengewinde, auf das die Überwurfmutter mit einem Innengewinde aufschraubbar oder aufgeschraubt ist.

Die Überwurfmutter verfügt im Bereich ihrer dem Abdichtabschnitt axial entgegengesetzten Seite zweckmäßigerweise über eine koaxial angeordnete, axiale Durchführöffnung, durch die eine an den Anschlussabschnitt angesteckte Fluidleitung hindurchragt. Der Anschlussvorgang einer Fluidleitung kann insbesondere so vonstattengehen, dass die Fluidleitung im vom Grundkörper abgenommenen Zustand der Überwurfmutter von der Seite der Durchführöffnung her durch die Überwurfmutter hindurchgeführt und dann an den Anschlussabschnitt angesteckt wird. Nach Herstellung dieser Steckverbindung kann dann die Überwurfmutter auf den Grundkörper aufgeschraubt werden, bis sie die Klemm- und Abdichtstellung einnimmt, in der sie unter anderem direkt oder indirekt radial klemmend auf den Außenumfang der angesteckten Fluidleitung einwirkt.

Je nach Ausgestaltung des Anschlussabschnittes kann die Steckmontage der Fluidleitung ein Einsteckvorgang oder ein Aufsteckvorgang sein. Besonders vorteilhaft ist eine Ausgestaltung, bei der die Fluidleitung dadurch an den Anschlussabschnitt ansteckbar ist, dass sie auf selbigen aufgesteckt wird. Der Anschlussabschnitt verfügt in diesem Fall zweckmäßigerweise über einen sich axial erstreckenden, insbesondere auch als Aufstecknippel bezeichenbaren Aufsteckstutzen, dessen Außendurchmesser zumindest partiell etwas größer ist als der Innendurchmesser der vorzugsweise gummielastischen Fluidleitung, so dass die Fluidleitung beim Aufstecken aufgeweitet wird und auch ohne Mitwirkung der Überwurfmutter bereits eine gewisse Fixierung erfährt. Die Überwurfmutter selbst weist an ihrem Innenumfang, zweckmäßigerweise im Bereich der oben erwähnten Durchführöffnung, eine ringförmige Klemmfläche auf, die auf der axialen Höhe des Aufsteckstutzens zu liegen kommt, wenn die Überwurfmutter in die Klemm- und Abdichtstellung geschraubt ist. Auf diese Weise wird die Wandung der Fluidleitung radial zwischen dem Aufsteckstutzen und der den Aufsteckstutzen konzentrisch umschließenden Klemmfläche festgeklemmt. Hierbei bewirkt die Klemmfläche zweckmäßigerweise zugleich eine Abdichtung zwischen der Überwurfmutter und der Fluidleitung, so dass selbst bei intensiven Reinigungsvorgängen keine Medien in den von der Überwurfmutter umschlossenen Bereich eindringen können.

Die Abdichtung im Bereich des Aufsteckstutzens ist besonders zuverlässig, wenn der Aufsteckstutzen an seinem Außenumfang mindestens einen ringförmigen Haltevorsprung aufweist, der von radial innen her in das Material der Wandung der aufgesteckten Fluidleitung eindrückt und der quasi als Widerlager für die von radial außen her wirksame Klemmfläche der Überwurfmutter fungiert.

Durch die vorstehend geschilderte Maßnahme wird erreicht, dass der zwischen der Überwurfmutter und dem Grundkörper vorhandene Hohlraum zur Umgebung der Anschlussvorrichtung hin komplett fluiddicht abdichtbar ist. Mithin kann weder Wasser noch Schmutz, noch irgendwelche Reinigungsflüssigkeit in den besagten Hohlraum von außen her eindringen. Letztlich verbleiben zwischen dem Grundkörper und der Umgebung nur zwei minimale Spalte, zum einen im Bereich des Trägerbauteils und zum anderen im Bereich der Fluidleitung, die jedoch beide durch die geschilderten Abdichtmaßnahmen fluiddicht verschlossen sind.

Die Komponenten der Anschlusseinheit lassen sich in beliebigen Materialien realisieren. Als besonders vorteilhaft wird eine Herstellung aus rostfreiem Edelstahl oder aus einem hochwertigen Kunststoffmaterial, insbesondere sogenanntes PEEK, angesehen.

Mit der erfindungsgemäßen Anschlussvorrichtung lässt sich bei Bedarf eine Gestaltung realisieren, bei der von außen her lediglich die Überwurfmutter sichtbar ist, wenn der Grundkörper unter Einnahme seiner Gebrauchsstellung an einem Trägerbauteil befestigt ist und eine angesteckte Fluidleitung durch die in der Klemm- und Abdichtstellung befindliche Überwurfmutter fixiert ist. Alle weiteren Teile der Anschlusseinheit werden somit zur Umgebung hin verdeckt.

Nachfolgend wird die Erfindung anhand der beiliegenden Zeichnung näher erläutert. In dieser zeigen:

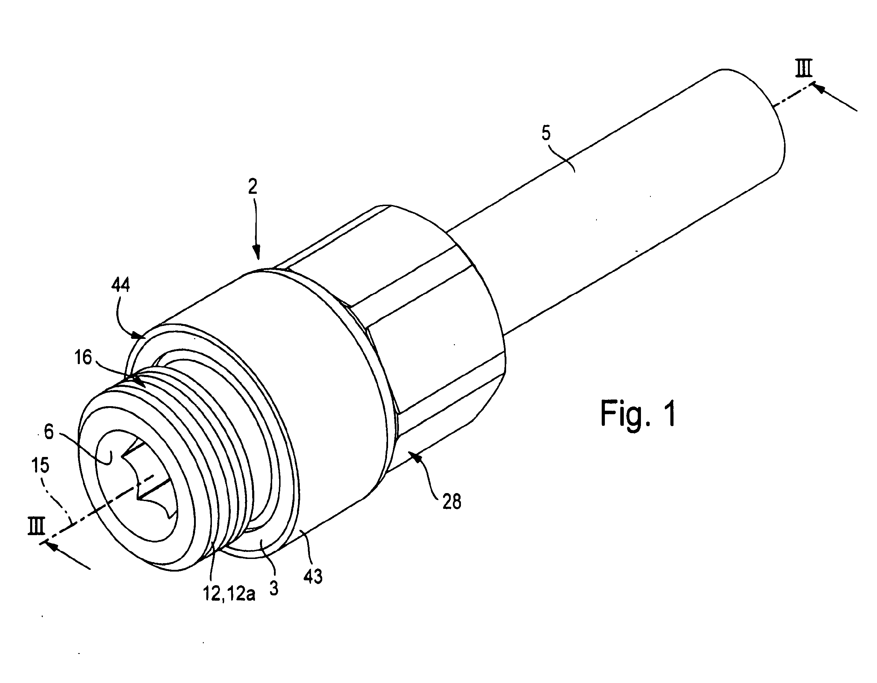

- Figur 1: eine perspektivische Darstellung der Anschlusseinheit einer bevorzugten Bauform der erfindungsgemäßen Anschlussvorrichtung, wobei auch noch der Endabschnitt einer angeschlossenen Fluidleitung sichtbar ist und ohne Darstellung eines Trägerbauteils, an dem die Anschlusseinheit mit ihrem Grundkörper unter Einnahme einer Gebrauchsstellung festlegbar ist,

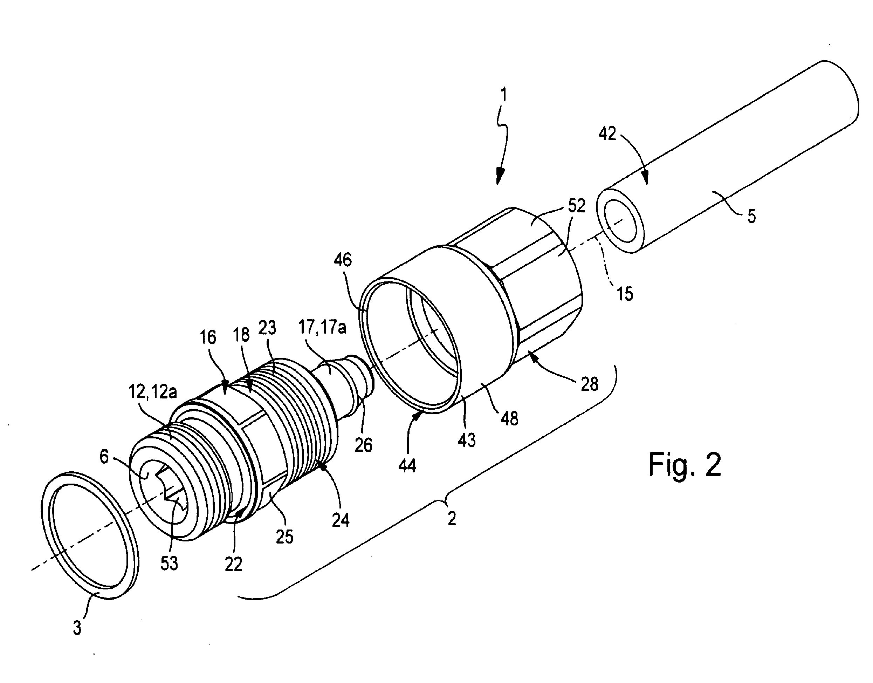

- Figur 2: die Anordnung aus Figur 1 in einer Explosionsdarstellung,

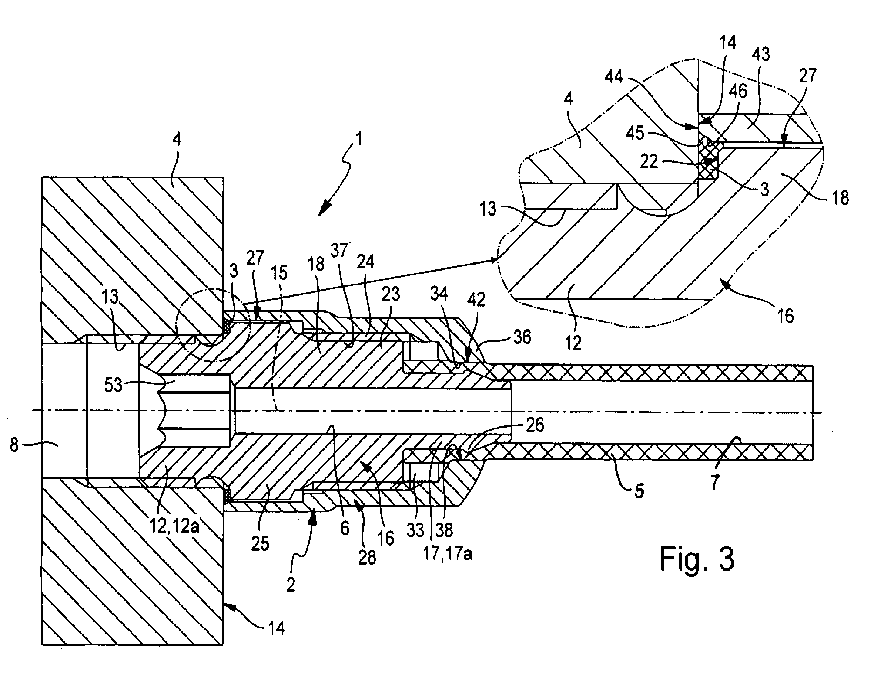

- Figur 3: einen Längsschnitt durch die in Figur 1 abgebildete Anschlussvorrichtung, wobei hier auch ein Ausschnitt eines Trägerbauteils ersichtlich ist, an dem die Anschlusseinheit unter Einnahme der Gebrauchsstellung ihres Grundkörpers befestigt ist, wobei ein umrahmter Ausschnitt nochmals separat vergrößert dargestellt ist, und

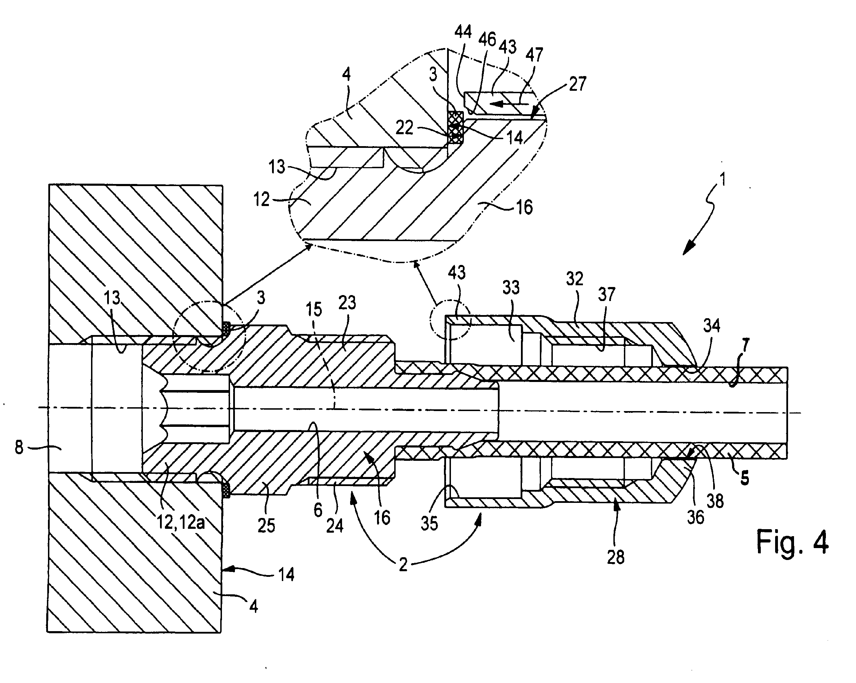

- Figur 4: in einer mit Figur 3 vergleichbaren Darstellungsweise einen Längsschnitt der Anschlussvorrichtung im noch nicht aufgeschraubten Zustand der Überwurfmutter, wobei in einem vergrößerten Ausschnitt ergänzend die Zuordnung zwischen dem Abdichtabschnitt der Überwurfmutter und dem mit ihr kooperierenden Dichtungsring kurz vor Erreichen der Klemm- und Abdichtstellung ersichtlich ist.

Die insgesamt mit Bezugsziffer 1 bezeichnete Anschlussvorrichtung verfügt über mindestens eine Anschlusseinheit 2 und über einen Dichtungsring 3. Unter Zwischenschaltung des Dichtungsringes 3 kann die Anschlusseinheit 2 an einem diesbezüglich separaten Trägerbauteil 4 befestigt werden. Das Trägerbauteil 4 kann ein Bestandteil der Anschlussvorrichtung 1 sein. Mit Hilfe der Anschlussvorrichtung 1 kann eine Fluidleitung 5 an das Trägerbauteil 4 angeschlossen werden.

Die Anschlussvorrichtung 1 kann auch mehrere an unterschiedlichen Stellen an ein und demselben Trägerbauteil 4 fixierbare Anschlusseinheiten 2 enthalten.

Die anschließbare Fluidleitung 5 besteht zweckmäßigerweise aus einem elastisch verformbaren Material, insbesondere aus Gummi oder aus einem Elastomermaterial. Es handelt sich bei ihr insbesondere um einen Fluidschlauch. Grundsätzlich kann sie aber auch als starres Rohr oder Rohrabschnitt ausgebildet sein.

Das Trägerbauteil 4 ist beispielsweise ein Gehäuse einer fluidtechnischen Komponente, insbesondere eines Ventils oder eines fluidbetätigten Antriebes. Im an der Anschlusseinheit 2 fixierten Zustand der Fluidleitung 5 wird durch einen Durchgangskanal 6 der Anschlusseinheit 2 hindurch eine Fluidverbindung zwischen einem in der Fluidleitung 5 ausgebildeten Leitungskanal 7 und einem Bauteilkanal 8 des Trägerbauteils 4 hergestellt.

Die Anschlusseinheit 2 verfügt über einen Befestigungsabschnitt 12, mit dem sie, insbesondere in lösbarer Weise, in einer in dem Trägerbauteil 4 ausgebildeten Befestigungsöffnung 13 fixierbar ist. Bei der Befestigungsöffnung 13 handelt es sich zweckmäßigerweise um einen zu einer Außenfläche 14 des Trägerbauteils 4 hin ausmündenden Endabschnitt des Bauteilkanals 8.

Die Anschlusseinheit 2 verfügt über einen bevorzugt eine längliche Gestalt aufweisenden Grundkörper 16, der eine Längsachse 15 aufweist und der in seiner Längsrichtung von dem schon erwähnten Durchgangskanal 6 durchsetzt ist. Ein rückseitiger Endabschnitt des Grundkörpers 16 bildet den Befestigungsabschnitt 12. Ein dem Befestigungsabschnitt 12 axial entgegengesetzter vorderer Endabschnitt des Grundkörpers 16 ist als Anschlussabschnitt 17 ausgebildet, an dem sich im Rahmen einer Steckmontage die Fluidleitung 5 anstecken lässt.

Der Durchgangskanal 6 mündet jeweils stirnseitig einerseits im Bereich des Befestigungsabschnittes 12 und andererseits im Bereich des Anschlussabschnittes 17 aus. Auf diese Weise stellt er eine durchgehende Fluidverbindung zwischen der am Anschlussabschnitt 17 fixierten Fluidleitung 5 und dem mit der Befestigungsöffnung 13 kommunizierenden Bauteilkanal 8 her, wenn der Grundkörper 16 unter Einnahme einer aus Figuren 3 und 4 ersichtlichen Gebrauchsstellung in die Befestigungsöffnung 13 eingesetzt und darin befestigt ist.

Der Befestigungsabschnitt 12 ist zweckmäßigerweise als Gewindeabschnitt 12a ausgebildet, der über ein Außengewinde verfügt. Die Befestigungsöffnung 13 des Trägerbauteils 4 ist in diesem Falle, wie abgebildet, mit einem Innengewinde versehen, in das der Grundkörper 16 mit seinem Gewindeabschnitt 12a einschraubbar ist. Bei einer alternativen, nicht abgebildeten Ausführungsform ist der Befestigungsabschnitt 12 als Einpressabschnitt gestaltet, der in eine daran angepasste Befestigungsöffnung 13 ohne Schraubverbindung einpressbar ist.

Der Grundkörper 16 verfügt zweckmäßigerweise über einen sich axial zwischen dem Befestigungsabschnitt 12 und dem Anschlussabschnitt 17 erstreckenden Hauptabschnitt 18. Die genannten Abschnitte 12, 18, 17 sind insbesondere einstückig miteinander verbunden.

Der Hauptabschnitt 18 verfügt zumindest in dem sich axial unmittelbar an den Befestigungsabschnitt 12 anschließenden Bereich über einen größeren Außendurchmesser als der Befestigungsabschnitt 12. Auf diese Weise ergibt sich im Übergangsbereich zwischen dem Befestigungsabschnitt 12 und dem Hauptabschnitt 18 eine Ringstufe mit einer axial nach rückwärtsgewandten, das heißt dem Befestigungsabschnitt 12 zugewandten ringförmigen Stirnfläche an dem Hauptabschnitt 18. Diese ringförmige Stirnfläche bildet eine axial nach rückwärts orientierte, bezüglich des Befestigungsabschnittes 12 konzentrische Dichtfläche 22.

Ein Längenabschnitt des Hauptabschnittes 18 ist als Gewindeabschnitt 23 ausgebildet und weist an seinem Außenumfang ein Außengewinde 24 auf. Der Gewindeabschnitt 23 schließt sich zweckmäßigerweise axial unmittelbar an den Anschlussabschnitt 18 an.

Der Grundkörper 16 verfügt zweckmäßigerweise über einen das Ansetzen eines Schraubwerkzeuges gestattenden Werkzeugangriffsabschnitt 25. Der Werkzeugangriffsabschnitt 25 ist außen zweckmäßigerweise als Mehrkant und insbesondere als Sechskant ausgebildet, so dass ein Schraubenschlüssel ansetzbar ist, um bei Bedarf ein Drehmoment einleiten zu können.

Der Werkzeugangriffsabschnitt 25 schließt sich vorzugsweise axial unmittelbar an den Befestigungsabschnitt 12 an. Er sitzt beim Ausführungsbeispiel axial zwischen dem Befestigungsabschnitt 12 und dem Gewindeabschnitt 23.

Um den Grundkörper 16 in seiner Gebrauchsstellung zu fixieren, wird er mit seinem Befestigungsabschnitt 12 in die Befestigungsöffnung 13 eingeschraubt. Zum Festziehen kann dabei der Werkzeugangriffsabschnitt 25 genutzt werden.

Der Anschlussabschnitt 17 verfügt beim Ausführungsbeispiel über eine besonders vorteilhafte Gestaltung. Er ist in der Form eines rohrförmigen Aufsteckstutzens 17a ausgebildet, dessen Außendurchmesser zweckmäßigerweise kleiner ist als derjenige des sich anschließenden Hauptabschnittes 18. Er ist von dem Durchgangskanal 6 durchsetzt, welcher stirnseitig vorne an dem Aufsteckstutzen 17a ausmündet.

Eine anzuschließende Fluidleitung 5 kann von vorne her axial auf den Aufsteckstutzen aufgesteckt werden. Die Figuren 3 und 4 zeigen den aufgesteckten Zustand. Zweckmäßigerweise ist der Außendurchmesser des Aufsteckstutzens 17a etwas größer als der Innendurchmesser der nicht aufgesteckten Fluidleitung, so dass selbige beim Aufstecken radial aufgeweitet wird und mit radialer Vorspannung auf dem Aufsteckstutzen 17a sitzt.

Die Festhaltefunktion des Aufsteckstutzens 17a kann dadurch begünstigt werden, dass am Außenumfang des Aufsteckstutzens 17a mindestens ein und vorzugsweise genau ein ringförmiger Haltevorsprung 26 ausgebildet ist, der in bezüglich des Aufsteckstutzens 17a konzentrischer Anordnung radial nach außen vorsteht. Der Haltevorsprung 26 ist insbesondere zahnförmig konturiert. Im aufgesteckten Zustand drückt der Haltevorsprung 26 von radial innen her in die bevorzugt elastische Wandung der Fluidleitung 5, so dass auch eine gewisse axiale Formschlussverbindung hergestellt wird.

Der oben erwähnte Dichtungsring 3 ist zweckmäßigerweise ein bezüglich des Grundkörpers 16 gesondertes Bauteil. Er kann vor dem Befestigen des Grundkörpers 16 auf den Befestigungsabschnitt 12 aufgesteckt werden, so dass er axial vor der Dichtfläche 22 zu liegen kommt.

Bei einem nicht gezeigten Ausführungsbeispiel ist der Dichtungsring 3 an dem Grundkörper 16 fixiert, insbesondere durch eine stoffschlüssige Verbindung. Der Grundkörper 16 und der Dichtungsring 3 können beispielsweise im Rahmen eines Mehrkomponenten-Spritzgießverfahrens integral ausgebildet sein.

In der Gebrauchsstellung des Grundkörpers 16 befindet sich der den Befestigungsabschnitt 12 konzentrisch umschließende Dichtungsring 3 axial zwischen der am Grundkörper 16 angeordneten Dichtfläche 22 und dem die Befestigungsöffnung 13 umrahmenden Abschnitt der Außenfläche 14 des Trägerbauteils 4. Der Dichtungsring 3 liegt jeweils mit Dichtkontakt einerseits an der Dichtfläche 22 des Grundkörpers 16 und andererseits an der Außenfläche 14 des Trägerbauteils 4 an. Durch entsprechendes Festziehen des Grundkörpers 16 mittels eines an den Werkzeugangriffsabschnitt 25 ansetzbaren Schraubwerkzeuges kann der Dichtungsring 3 derart axial verspannt werden, dass sich eine sichere fluiddichte Abdichtung zwischen dem Grundkörper 16 und dem Trägerbauteil 4 einstellt und eine Leckage des gegebenenfalls durch den Leitungskanal 7, den Durchgangskanal 6 und den Bauteilkanal 8 hindurchströmenden Fluides ausgeschlossen ist. Bei diesem Fluid handelt es sich vorzugsweise um Druckluft, wobei es sich allerdings auch um ein anderes gasförmiges Medium oder auch um ein flüssiges Medium handeln kann.

Der Außendurchmesser des Dichtungsringes 3 ist aus noch zu erläuternden Gründen vorzugsweise größer gewählt als der Außendurchmesser des Grundkörpers 16 in zumindest dem sich axial nach vorne, zum Anschlussabschnitt 17 hin, anschließenden Längenabschnitt. Zweckmäßigerweise verfügt der Dichtungsring 3 über einen Außendurchmesser, der größer ist als jeder Außendurchmesser des Grundkörpers 16. Jedenfalls ist die Durchmesserabstimmung insbesondere so getroffen, dass der Dichtungsring 3 mit einem ringförmigen äußeren Randabschnitt 45 radial nach außen über den Außenumfang 27 zumindest des sich an die Dichtfläche 22 unmittelbar axial anschließenden Längenabschnittes des Hauptabschnittes 18 vorsteht.

Der bezüglich des benachbarten Außenumfanges 27 größere Durchmesser des Dichtungsringes 3 liegt zweckmäßigerweise auch schon im axial nicht verpressten Zustand des Dichtungsringes 3 vor. Beim Anziehen des Grundkörpers 16 kann sich allerdings auch eine Vergrößerung des Außendurchmessers des Dichtungsringes 3 einstellen, weil dieser axial zusammengedrückt wird. Er wandert quasi geringfügig radial nach außen.

Die Anschlusseinheit 2 weist zusätzlich zu dem Grundkörper 16 eine diesbezüglich separat ausgebildete Überwurfmutter 28 auf. Die Überwurfmutter 28 umschließt peripher einen Hohlraum 33, der axial zu einander entgegengesetzten Seiten hin offen ist. An einer Vorderseite des Hohlraumes 33 befindet sich eine Durchführöffnung 34 für die anzuschließende Fluidleitung 5, an einer diesbezüglich axial entgegengesetzten Rückseite verfügt der Hohlraum 33 über eine Aufschrauböffnung 35.

Die Überwurfmutter 28 ist zweckmäßigerweise ein starres und insbesondere einstückiges Bauteil.

Der Durchmesser der Aufschrauböffnung 35 ist zweckmäßigerweise größer als derjenige der Durchführöffnung 34. Exemplarisch verfügt die Überwurfmutter 28 über einen hülsenförmigen Mantelabschnitt 32, der eine periphere Wandung des Hohlraumes 33 bildet und der rückseitig mit der Aufschrauböffnung 35 endet. An die Vorderseite des Mantelabschnittes 32 schließt sich ein unter Bildung der Durchführöffnung 34 mittig gelochter Abschlusswandabschnitt 36 an, der einstückig mit dem Mantelabschnitt 32 ausgebildet ist. Die Überwurfmutter 28 kann insbesondere hutförmig gestaltet sein.

Am Innenumfang des Mantelabschnittes 32 ist ein Innengewinde 37 ausgebildet. Die Überwurfmutter 28 kann mit ihrer Aufschrauböffnung 35 voraus von vorne her auf den Grundkörper 16 aufgesetzt und durch Verdrehen mit seinem Innengewinde 37 auf das Außengewinde 24 des Gewindeabschnittes 23 des Grundkörpers 16 aufgeschraubt werden.

Der Durchmesser der Durchführöffnung 34 entspricht zweckmäßigerweise zumindest im Wesentlichen dem Außendurchmesser der Fluidleitung 5 in deren nicht auf dem Aufsteckstutzen 17a sitzenden Bereich. Die Durchmesser sind so aufeinander abgestimmt, dass die Überwurfmutter 28, bevor die Fluidleitung 5 auf den Aufsteckstutzen 17a aufgesteckt wird, mit ihrer Durchführöffnung 34 voraus auf die Fluidleitung 5 aufgesteckt werden kann. Die weitere Anschlussreihenfolge gestaltet sich dann derart, dass zunächst die Fluidleitung 5 mit ihrem Endabschnitt auf den Aufsteckstutzen 17a aufgesteckt wird und anschließend die auf der Fluidleitung 5 sitzende Überwurfmutter 28 in Richtung zu dem Grundkörper 16 geschoben und dann auf den Grundkörper 16 aufgeschraubt wird.

Spätestens wenn die Überwurfmutter 28 im Rahmen des Aufschraubvorganges eine aus Figuren 1 und 3 ersichtliche kombinierte Klemm- und Abdichtstellung erreicht hat, kommt ihre Durchführöffnung 34 auf gleicher axialer Höhe mit dem Aufsteckstutzen 17a zu liegen und übt mit ihrer im Folgenden als Klemmfläche 38 bezeichneten Innenumfangsfläche eine radiale Klemmkraft auf den von ihr umschlossenen Längenabschnitt der Außenumfangsfläche 42 der Fluidleitung 5 aus. Dieser Klemmeffekt ist darauf zurückzuführen, dass der auf den Aufsteckstutzen 17a aufgesteckte Endabschnitt der Fluidleitung 5 aufgeweitet ist und mithin einen Außendurchmesser hat, der größer ist als der Innendurchmesser der Klemmfläche 38. Auf diese Weise wird die Fluidleitung 5 ringsum in radialer Richtung von einer durch die Klemmfläche 38 hervorgerufenen Klemmkraft beaufschlagt.

Die Klemmwirkung ist besonders ausgeprägt, wenn die Klemmfläche 38 in der Klemm- und Abdichtstellung der Überwurfmutter 28 auf gleicher axialer Höhe mit dem Haltevorsprung 26 zu liegen kommt. Dies ist beim Ausführungsbeispiel der Fall.

Durch den klemmenden Kontakt zwischen der Klemmfläche 38 und der Außenumfangsfläche 42 der Fluidleitung 5 wird in vorteilhafter Weise auch ein abdichtender Kontakt bzw. eine Abdichtung erzielt, wodurch der Hohlraum 33 von der Umgebung der Überwurfmutter 28 fluiddicht abgeschottet ist.

In der Klemm- und Abdichtstellung kooperiert der die Aufschrauböffnung 35 umschließende Endabschnitt der Überwurfmutter 28 beziehungsweise deren Mantelabschnittes 32 unter Abdichtung mit dem Dichtungsring 3. Besagter Endabschnitt der Überwurfmutter 28 sei daher im Folgenden als Abdichtabschnitt 43 bezeichnet. Dieser Abdichtabschnitt 43 ist insbesondere hülsenförmig gestaltet. Zweckmäßigerweise verfügt der Abdichtabschnitt 43 über starre und nicht flexible Eigenschaften, wobei vorzugsweise die gesamte Überwurfmutter 28 aus ein und demselben starren Material besteht, insbesondere aus Edelstahl oder aus einem Hartkunststoff.

Wenn die Überwurfmutter 28 in die Klemm- und Abdichtstellung auf den Grundkörper 16 aufgeschraubt ist, erstreckt sie sich zweckmäßigerweise bis hin zur Außenfläche 14 des Trägerbauteils 4. Dabei greift sie mit dem Abdichtabschnitt 43 in axialer Richtung radial außen an dem Dichtungsring 3 vorbei und liegt mit ihrer nach rückwärtsgewandten ringförmigen Stirnfläche 44, die gleichzeitig die Stirnfläche des Abdichtabschnittes 43 bildet, direkt an der Außenfläche 14 des Trägerbauteils 4 an. Auf diese Weise ist der Dichtungsring 3 durch den Mantelabschnitt 32 beziehungsweise durch den Abdichtabschnitt 43 der Überwurfmutter 28 verdeckt und von außen her aus jedem Blickwinkel unsichtbar. Die Überwurfmutter 28 kann derart festgezogen werden, dass sie mit der Außenfläche 14 des Trägerbauteils 4 fest verspannt ist.

In dieser Klemm- und Abdichtstellung steht der Abdichtabschnitt 43 zugleich auch in Dichtkontakt mit dem von ihm radial außen umschlossenen Dichtungsring 3. Der Abdichtabschnitt 43 drückt gegen den über den Außenumfang 27 hinausragenden äußeren Randabschnitt 45 des Dichtungsringes 3 und verpresst diesen zwischen sich, der Außenfläche 14 des Trägerbauteils 4 und vorzugsweise auch dem Grundkörper 16. Mithin ergibt sich eine sichere Abdichtung des Übergangsbereiches zwischen der Überwurfmutter 28 und dem Trägerbauteil 4.

In der Klemm- und Abdichtstellung der Überwurfmutter 28 ist somit der Hohlraum 33 der Überwurfmutter 28 allseits hermetisch abgedichtet. Für die rückseitige Abdichtung sorgt der Dichtungsring 3, für die Abdichtung an der Vorderseite sorgt die dichtend wirkende Klemmfläche 38.

Was die Funktionalität des Dichtungsringes 3 anbelangt, besteht exemplarisch ein besonderer Vorteil darin, dass dieser Dichtungsring 3 eine Mehrfachfunktion hat, indem er nicht nur die Überwurfmutter 28 bezüglich des Trägerbauteils 4 abdichtet, sondern auch - und zwar unabhängig vom Vorhandensein der Überwurfmutter 28 - für die Abdichtung zwischen dem Grundkörper 16 und dem Trägerbauteil 14 sorgt. Es wird auf diese Weise kein zusätzlicher Dichtungsring benötigt.

Wie aus Figur 3 gut ersichtlich ist, ermöglicht es die Überwurfmutter 28, dass der in der Grundstellung an dem Trägerbauteil 4 befestigte Grundkörper 16 von der in der Klemm- und Abdichtstellung befindlichen Überwurfmutter 28 ausgehend von der Durchführöffnung 34 axial bis hin zu der die Befestigungsöffnung 13 umrahmenden Außenfläche 14 des Trägerbauteils 4 ringsum umschlossen und abgedeckt ist. Da auch der Dichtungsring 3 von dieser Kapselung profitiert, kann er selbst bei Reinigungsmaßnahmen, die unter hohem Sprühdruck ablaufen, keine Beschädigungen erfahren.

Die geschilderte Abdichtwirkung des Dichtungsringes 3 ist besonders effektiv, wenn der Dichtungsring 3 in der Klemm- und Abdichtstellung der Überwurfmutter 28 nicht nur von radial innen her an dem hülsenförmigen Abdichtabschnitt 43 anliegt, sondern durch den Abdichtabschnitt 43 auch in Achsrichtung der Längsachse 15, also axial, zwischen dem Abdichtabschnitt 43 und der Außenfläche 14 des Trägerbauteils 4 verspannt wird.

Dies lässt sich besonders zweckmäßig dadurch realisieren, dass am Innenumfang des Abdichtabschnittes 43 eine bezüglich der Überwurfmutter 28 konzentrische ringförmige Ausnehmung 46 angeordnet ist, die sowohl axial, also zu der Stirnfläche 44 hin, als auch radial nach innen hin offen ist. Diese Ausnehmung 46 ist so angeordnet und gestaltet, dass ihr Durchmesser mindestens dem Außendurchmesser des zwischen dem Grundkörper 16 und dem Trägerbauteil 4 eingespannten Dichtungsringes 3 entspricht. Jedenfalls sollte die ringförmige Ausnehmung 46 so platziert sein, dass der äußere Randabschnitt 45 des Dichtungsringes 3 in diese Ausnehmung 46 eintaucht, wenn der Abdichtabschnitt 43 beim Aufschrauben der Überwurfmutter 28 gemäß Pfeil 47 (Figur 4) in Richtung der Außenfläche 14 des Trägerbauteils 4 bewegt wird. Bei dieser Bewegung gemäß Pfeil 47 greift der die Stirnfläche 44 aufweisende Bereich des Abdichtabschnittes 43 in axialer Richtung radial außerhalb am Dichtungsring 3 vorbei, während die die Ausnehmung 46 begrenzende Fläche des Abdichtabschnittes 43 drückend auf den äußeren Randabschnitt 45 des Dichtungsringes 3 einwirkt. Dieser äußere Randabschnitt 45 wird dann gemäß Figur 3 zusammengequetscht, woraus eine abdichtend wirkende Gegenkraft resultiert.

Wenn sich die Überwurfmutter 28 in der Klemm- und Abdichtstellung befindet, ist somit der Dichtungsring 3 mit einem Teil seines Volumens unter Vorspannung in der ringförmigen Ausnehmung 46 aufgenommen.

Die ringförmige Begrenzungsfläche der ringförmigen Ausnehmung 46 ist zweckmäßigerweise konisch ausgebildet und verjüngt sich ausgehend von der Stirnfläche 44 axial in Richtung des Inneren des Hohlraumes 33. Um dies zu realisieren, ist die ringförmige Ausnehmung 46 zweckmäßigerweise von einer Anfasung oder Fase gebildet, die sich im Übergangsbereich zwischen der Stirnfläche 44 und dem Innenumfang des Mantelabschnittes 32 befindet.

Durch die zur zumindest partiellen Aufnahme des Dichtungsringes 3 dienende ringförmige Ausnehmung 46 des Abdichtabschnittes 43 wird auch auf einfache Weise gewährleistet, dass der Dichtungsring 3 beim Anziehen der Überwurfmutter 28 nicht beschädigt wird. Bevor die Kompression ein schädigendes Maß erreicht, gelangt der Abdichtabschnitt 43 unter Erfüllung einer Anschlagfunktion mit seiner Stirnfläche 44 zur Anlage "auf Block" an der Außenfläche 14.

Der Abdichtabschnitt 43 ist zweckmäßigerweise Bestandteil eines hülsenförmigen Längenabschnittes 48 des Mantelabschnittes 32, der an seinem Innenumfang kein Gewinde aufweist und der in der Klemm- und Abdichtstellung der Überwurfmutter 28 den Werkzeugangriffsabschnitt 25 koaxial umschließt. Das Innengewinde 37 befindet sich vorzugsweise in einem Längenabschnitt des Mantelabschnittes 32, der sich zwischen dem hülsenförmigen Längenabschnitt 48 und dem Abschlusswandabschnitt 36 der Überwurfmutter 28 erstreckt.

Zweckmäßigerweise ist die periphere Außenkontur der Überwurfmutter 28, zumindest über einen Teil der Baulänge der Überwurfmutter 28 hinweg, unrund gestaltet und hierzu beispielsweise mit mehreren über den Außenumfang verteilten Abflachungen 52 versehen, so dass das Einleiten eines die Überwurfmutter 28 aufschraubenden Drehmoments erleichtert wird. Die Überwurfmutter 28 kann im Bereich der Abflachungen 52 leicht ergriffen und verdreht werden. Auch ein Schraubwerkzeug kann dort bei Bedarf angesetzt werden.

Sollte sich aufgrund eines zu festen Anziehens die Schraubverbindung zwischen der Überwurfmutter 28 und dem Grundkörper 16 einmal nicht mehr lösen lassen, kann durch Einleitung eines Drehmoments in die Überwurfmutter 28 die gesamte Anschlusseinheit 2 aus der Befestigungsöffnung 13 herausgeschraubt werden. Im derart herausgeschraubten Zustand ermöglicht eine in dem Durchgangskanal 6 zweckmäßigerweise ausgebildete Innenmehrkantkontur 53 das Ansetzen eines Gegenhaltewerkzeuges, so dass sich die Überwurfmutter 28 vom Grundkörper 16 abschrauben lässt.

## Patentansprüche

1. Anschlussvorrichtung für eine Fluidleitung, mit mindestens einer Anschlusseinheit (2), die einen Grundkörper (16) aufweist, der axial von einem einenends an einem rückseitigen Befestigungsabschnitt (12) und andernends an einem vorderseitigen Anschlussabschnitt (17) ausmündenden Durchgangskanal (6) durchsetzt ist, wobei der Befestigungsabschnitt (12) ausgebildet ist, um in einer Gebrauchsstellung des Grundkörpers (16) in eine Befestigungsöffnung (13) eines bezüglich der Anschlusseinheit (2) gesonderten Trägerbauteils (4) einzugreifen und in dieser Befestigungsöffnung (13) befestigt zu sein und wobei der Anschlussabschnitt (17) zum Anstecken einer anzuschließenden und mit dem Durchgangskanal (6) zu verbindenden Fluidleitung (5) ausgebildet ist, wobei die Anschlusseinheit (2) ferner eine Überwurfmutter (28) aufweist, die koaxial derart auf den Grundkörper (16) aufschraubbar ist, dass sie eine eine an dem Anschlussabschnitt (17) angesteckte Fluidleitung (5) beaufschlagende Klemmkraft hervorruft, **dadurch gekennzeichnet, dass** der dem Befestigungsabschnitt (12) des Grundkörpers (16) zugewandte hintere Endabschnitt der Überwurfmutter (28) als Abdichtabschnitt (43) ausgebildet ist, wobei die Überwurfmutter (28) auf dem die Gebrauchsstellung einnehmenden Grundkörper (16) in eine kombinierte Klemm- und Abdichtstellung schraubbar ist, in der sie zum einen die Klemmkraft bezüglich der angesteckten Fluidleitung (5) hervorruft und zum anderen mit ihrem Abdichtabschnitt (43) unter gleichzeitiger abdichtender Beaufschlagung eines an einer die Befestigungsöffnung (13) umrahmenden Außenfläche (14) des Trägerbauteils (4) anliegenden Dichtungsringes (3) der Anschlussvorrichtung (1) mit dieser Außenfläche (14) verspannt ist.

2. Anschlussvorrichtung nach Anspruch 1, **dadurch gekennzeichnet, dass** der Abdichtabschnitt (43) derart ausgebildet ist, dass er in der Gebrauchsstellung des Grundkörpers (16) bei Einnahme der Klemm- und Abdichtstellung der Überwurfmutter (28) unter gleichzeitigem Dichtkontakt mit dem Dichtungsring (3) radial außen an dem Dichtungsring (3) axial vorbeigreift und mit seiner Stirnfläche (44) direkt an der die Befestigungsöffnung (13) des Trägerbauteils (4) umrahmenden Außenfläche (14) anliegt.

3. Anschlussvorrichtung nach Anspruch 2, **dadurch gekennzeichnet, dass** der Abdichtabschnitt (43) an seinem Innenumfang eine konzentrisch angeordnete, sowohl nach radial innen als auch zur Stirnfläche (44) des Abdichtabschnittes (43) hin offene ringförmige Ausnehmung (46) aufweist, in der der Dichtungsring (3) in der Gebrauchsstellung des Grundkörpers (16) bei Einnahme der Klemm- und Abdichtstellung der Überwurfmutter (28) mit zumindest einem Teil seines Volumens unter Vorspannung aufgenommen ist, wobei die ringförmige Ausnehmung (46) zweckmäßigerweise von einer konischen Fläche begrenzt ist, die insbesondere von einer Anfasung der Überwurfmutter (28) gebildet ist.

4. Anschlussvorrichtung nach einem der Ansprüche 1 bis 3, **dadurch gekennzeichnet, dass** der Dichtungsring (3) in der Klemm- und Abdichtstellung der Überwurfmutter (28) zwischen dem Abdichtabschnitt (43) und dem Grundkörper (16) unter Abdichtung verspannt ist.

5. Anschlussvorrichtung nach einem der Ansprüche 1 bis 4, **dadurch gekennzeichnet, dass** der Dichtungsring (3) in der Gebrauchsstellung des Grundkörpers (16) durch den Abdichtabschnitt (42) der die Klemm- und Abdichtstellung einnehmenden Überwurfmutter (28) unter Abdichtung axial gegen die die Befestigungsöffnung (13) umrahmende Außenfläche (14) des Trägerbauteils (4) angedrückt ist.

6. Anschlussvorrichtung nach einem der Ansprüche 1 bis 5, **dadurch gekennzeichnet, dass** der Grundkörper (16) axial nach vorne hin im Anschluss an den Befestigungsabschnitt (12) einen einen größeren Außendurchmesser als der Befestigungsabschnitt (12) aufweisenden Hauptabschnitt (18) enthält, dessen dem Befestigungsabschnitt (12) zugewandte rückwärtige Stirnfläche eine ringförmige Dichtfläche (22) bildet, die in der Gebrauchsstellung des Grundkörpers (16) der Außenfläche (14) des Trägerbauteils (4) gegenüberliegt, wobei axial zwischen der Dichtfläche (22) des Hauptabschnittes (18) und der Außenfläche (14) des Trägerbauteils (4) ein unter Abdichtung an beiden Flächen (22, 14) anliegender Dichtungsring (3) der Anschlussvorrichtung (1) angeordnet ist.

7. Anschlussvorrichtung nach Anspruch 6, **dadurch gekennzeichnet, dass** der in der Klemm- und Abdichtstellung der Überwurfmutter (28) dichtend mit deren Abdichtabschnitt (43) zusammenwirkende Dichtungsring (3) mit dem zwischen der Dichtfläche (22) des Hauptabschnittes (18) und der Außenfläche (14) des Trägerbauteils (4) angeordneten Dichtungsring (3) identisch ist, derart, dass ein einziger Dichtungsring (3) vorhanden ist, der gleichzeitig mit der Außenfläche (14) des Trägerbauteils (4), mit dem Grundkörper (16) der Anschlusseinheit (2) und mit dem Abdichtabschnitt (43) der Überwurfmutter (28) in Dichtkontakt steht, wenn die Überwurfmutter (28) die Klemm- und Abdichtstellung einnimmt.

8. Anschlussvorrichtung nach einem der Ansprüche 1 bis 7, **dadurch gekennzeichnet, dass** der Dichtungsring (3) mit einem äußeren Randabschnitt (45) radial nach außen über den Außenumfang (27) des Grundkörpers (16) vorsteht, wobei dieser äußere Randabschnitt (45) des Dichtungsringes (3) vom Abdichtabschnitt (43) der in der Klemm- und Abdichtstellung befindlichen Überwurfmutter (28) beaufschlagt ist.

9. Anschlussvorrichtung nach einem der Ansprüche 1 bis 8, **dadurch gekennzeichnet, dass** der Befestigungsabschnitt (12) ein zur Einschraubbefestigung in der Befestigungsöffnung (13) des Trägerbauteils (4) ausgebildeter Gewindeabschnitt (12a) ist, wobei der Grundkörper (16) zweckmäßigerweise axial im Anschluss an den Gewindeabschnitt (12a) einen über eine Mehrkantgestalt verfügenden Werkzeugangriffsabschnitt (25) aufweist, an dem sich ein Schraubwerkzeug ansetzen lässt.

10. Anschlussvorrichtung nach einem der Ansprüche 1 bis 9, **dadurch gekennzeichnet, dass** der Grundkörper (16) ein Außengewinde (24) aufweist, auf das die Überwurfmutter (28) mit einem Innengewinde (37) aufschraubbar oder aufgeschraubt ist.

11. Anschlussvorrichtung nach einem der Ansprüche 1 bis 10, **dadurch gekennzeichnet, dass** die Überwurfmutter (28) im Bereich ihrer dem Abdichtabschnitt (43) axial entgegengesetzten Vorderseite eine axiale Durchführöffnung (34) aufweist, durch die die an den Anschlussabschnitt (17) angesteckte Fluidleitung (5) hindurchragt.

12. Anschlussvorrichtung nach einem der Ansprüche 1 bis 11, **dadurch gekennzeichnet, dass** der Grundkörper (16) in seiner Grundstellung von der in der Klemm- und Abdichtstellung befindlichen Überwurfmutter (28) ausgehend von der Durchführöffnung (34) axial bis hin zu der die Befestigungsöffnung (13) umrahmenden Außenfläche (14) des Trägerbauteils (4) ringsum umschlossen und verdeckt ist.

13. Anschlussvorrichtung nach einem der Ansprüche 1 bis 12, **dadurch gekennzeichnet, dass** der Anschlussabschnitt (17) des Grundkörpers (16) einen axial abstehenden Aufsteckstutzen (17a) aufweist, auf den die anzuschließende Fluidleitung (5) aufsteckbar ist, wobei die Überwurfmutter (28) an ihrem Innenumfang eine ringförmige Klemmfläche (38) aufweist, die bei Einnahme der Klemm- und Abdichtstellung auf axialer Höhe des Aufsteckstutzens (17a) liegt und dabei die Außenumfangsfläche (42) der auf den Aufsteckstutzen (17a) aufgesteckten Fluidleitung (5) ringsum unter gleichzeitigem Dichtkontakt klemmend beaufschlagen kann.

14. Anschlussvorrichtung nach Anspruch 13 in Verbindung mit Anspruch 12, **dadurch gekennzeichnet, dass** die ringförmige Klemmfläche (38) am Innenumfang der Durchführöffnung (34) ausgebildet ist.

15. Anschlussvorrichtung nach Anspruch 13 oder 14, **dadurch gekennzeichnet, dass** der Aufsteckstutzen (17a) an seinem Außenumfang mindestens einen insbesondere zahnartig konturierten ringförmigen Haltevorsprung (26) aufweist und die Überwurfmutter (28) so ausgebildet ist, dass ihre Klemmfläche (38) bei Erreichen der Klemm- und Abdichtstellung den mindestens einen Haltevorsprung (26) koaxial umschließt, so dass die Fluidleitung (5) zwischen der Klemmfläche (38) und dem mindestens einen Haltevorsprung (26) radial einspannbar ist.

16. Anschlussvorrichtung nach einem der Ansprüche 1 bis 15, **dadurch gekennzeichnet, dass** die Überwurfmutter (28) einstückig ausgebildet ist.

17. Anschlussvorrichtung nach einem der Ansprüche 1 bis 16, **dadurch gekennzeichnet, dass** sie mindestens eine Anschlusseinheit (2), ein die Befestigungsöffnung (13) und die Außenfläche (14) aufweisendes Trägerbauteil (4) und mindestens einen zwischen der Anschlusseinheit (2) und dem Trägerbauteil (4) angeordneten oder anzuordnenden Dichtungsring (3) aufweist.

## Claims

1. Connection device for a fluid line, with at least one connection unit (2) which has a base body (16) through which a through passage (6) runs axially, opening out at one end at a rear mounting section (12) and at the other end at a front-side connection section (17), wherein the mounting section (12) is designed to engage, in a position of use of the base body (16), in a mounting orifice (13) of a support element (4) which is separate from the connection unit (2), and to be fixed in this mounting orifice (13), and wherein the connection section (17) is designed for the plugging-in of a fluid line (5) to be connected and to be linked to the through passage (6), wherein the connection unit (2) also has a union nut (28) which may be screwed coaxially on to the base body (16) in such a way that it generates a clamping force acting on a fluid line (5) plugged onto the connection section (17), **characterised in that** the rear end section of the union nut (28) facing the mounting section (12) of the union nut (28) is designed as a sealing section (43), wherein the union nut (28) may be screwed on the base body (16) adopting the position of use into a combined clamping and sealing position, in which on the one hand it generates the clamping force with respect to the plugged-in fluid line (5) and on the other hand with its sealing section (43), under simultaneous sealing pressure-loading of a seal ring (3) of the connection device (1) which abuts an outer surface (14) of the support element (4) framing the mounting orifice (13), it is clamped against this outer surface (14).

2. Connection device according to claim 1, **characterised in that** the sealing section (43) is so designed that, in the position of use of the base body (16), on adoption of the clamping and sealing position of the union nut (28) under simultaneous sealing contact with the seal ring (3) on the radial outside, it reaches axially past the the seal ring (3) and with its end face (44) directly abuts the outer surface (14) framing the mounting orifice (13) of the support element (4).

3. Connection device according to claim 2, **characterised in that** the sealing section (43) has on its inner periphery a concentric annular recess (46), open both radially inwards and also towards the end face (44) of the sealing section (43), in which the the seal ring (3) is held in the position of use of the base body (16) on adoption of the clamping and sealing position of the union nut (28) with at least a part of its volume under preload, wherein the annular recess (46) is bounded expediently by a conical surface, in particular formed by a chamfer of the union nut (28).

4. Connection device according to any of claims 1 to 3, **characterised in that** the seal ring (3), in the clamping and sealing position of the union nut (28), is clamped with sealing between the sealing section (43) and the base body (16).

5. Connection device according to any of claims 1 to 4, **characterised in that** the seal ring (3) in the position of use of the base body (16) is pressed axially with sealing, by the sealing section (42) of the union nut (28) adopting the clamping and sealing position, against the outer surface (14) of the support element (4) framing the mounting orifice (13).

6. Connection device according to any of claims 1 to 5, **characterised in that** the base body (16), axially towards the front and following the mounting section (12), includes a main section (18) with a greater outside diameter than the mounting section (12) and with a rear end face facing the mounting section (12) which forms an annular sealing face (22) and in the position of use of the base body (16) lies opposite the outer surface (14) of the support element (4), wherein a seal ring (3) of the connection device (1) fitting up against both surfaces (22, 14) with sealing is arranged axially between the sealing face (22) of the main section (18) and the outer surface (14) of the support element (4).

7. Connection device according to claim 6, **characterised in that** the seal ring (3) cooperating with the sealing section (43) of the union nut (28) in the clamping and sealing position of the latter is identical to the seal ring (3) fitted between the sealing face (22) of the main section (18) and the outer surface (14) of the support element (4), in such a way that a single seal ring (3) is provided which is in simultaneous sealing contact with the outer surface (14) of the support element (4), with the base body (16) of the connection unit (2), and with the sealing section (43) of the union nut (28), when the union nut (28) adopts the clamping and sealing position.

8. Connection device according to any of claims 1 to 7, **characterised in that** the seal ring (3) protrudes with an outer boundary section (45) radially outwards beyond the external periphery (27) of the base body (16), wherein this outer boundary section (45) of the seal ring (3) is pressure-loaded by the sealing section (43) of the union nut (28) in the clamping and sealing position.

9. Connection device according to any of claims 1 to 8, **characterised in that** the mounting section (12) is a threaded section (12a) designed for screw fixing in the mounting orifice (13) of the support element (4), wherein the base body (16) has axially adjoining the threaded section (12a) a tool application section (25) with a polygonal shape, at which a screwdriver may be applied.

10. Connection device according to any of claims 1 to 9, **characterised in that** the base body (16) has an external thread (24), on to which the union nut (28) may be or is screwed with an internal thread (37).

11. Connection device according to any of claims 1 to 10, **characterised in that** the union nut (28) has in the area of its front side axially opposite the sealing section (43) an axial through opening (34), through which extends the fluid line (5) plugged into the connection section (17) extends.

12. Connection device according to any of claims 1 to 11, **characterised in that** the base body (16) in its position of use is encompassed all round and concealed by the union nut (28) in the clamping and sealing position axially from the through opening (34) to the outer surface (14) of the support element (4) framing the mounting orifice (13).

13. Connection device according to any of claims 1 to 12, **characterised in that** the connection section (17) of the base body (16) has an axially protruding slip-fit connecting piece (17a), on to which the fluid line (5) to be connected may be slipped, wherein the union nut (28) has on its inner periphery an annular clamping face (38) which, on adoption of the clamping and sealing position, lies at the axial height of the slip-fit connecting piece (17a) and is thereby able to act with all-round clamping pressure on the the external peripheral surface (42) of the fluid line (5) slipped on to the slip-fit connecting piece (17a), with simultaneous sealing contact.

14. Connection device according to claim 13 in conjunction with claim 12, **characterised in that** the annular clamping face (38) is formed on the inner periphery of the through opening (34).

15. Connection device according to claim 13 or 14, **characterised in that** the slip-fit connecting piece (17a) has on its external periphery at least one contoured annular retaining projection (26), in particular toothed, and the union nut (28) is so designed that its clamping face (38), on reaching the clamping and sealing position, coaxially encompasses the retaining projection or projections (26), so that the fluid line (5) may be clamped radially between the clamping face (38) and the retaining projection or projections (26).

16. Connection device according to any of claims 1 to 15, **characterised in that** the union nut (28) is made in one piece.

17. Connection device according to any of claims 1 to 16, **characterised in that** it has at least one connection unit (2), a support element (4) with the mounting orifice (13) and the outer surface (14), and at least one seal ring (3) fitted or to be fitted between the connection unit (2) and the support element (4).

## Revendications

1. Dispositif de raccordement pour une conduite de fluide, comprenant au moins une unité de raccordement (2), qui présente un corps de base (16), lequel est traversé axialement par un canal de passage (6) débouchant à une extrémité au niveau d'une section de fixation (12) côté arrière et à une autre extrémité au niveau d'une section de raccordement (17) côté avant, sachant que la section de fixation (12) est réalisée pour venir en prise, dans une position d'utilisation du corps de base (16), avec une ouverture de fixation (13) d'un élément de support (4) séparé par rapport à l'unité de raccordement (2) et pour être fixée dans ladite ouverture de fixation (13), et sachant que la section de raccordement (17) est réalisée pour enficher une conduite de fluide (5) devant être connectée et devant être reliée au canal de passage (6), sachant que l'unité de raccordement (2) présente en outre un écrou d'accouplement (28), qui peut être vissé de manière coaxiale sur le corps de base (16) de telle manière qu'il provoque une force de serrage sollicitant une conduite de fluide (5) enfichée au niveau de la section de raccordement (17), **caractérisé en ce que** la section d'extrémité arrière, tournée vers la section de fixation (12) du corps de base (16), de l'écrou d'accouplement (28) se présente sous la forme d'une section d'étanchéification (43), sachant que l'écrou d'accouplement (28) peut être vissé sur le corps de base (16) adoptant la position d'utilisation dans une position combinée de serrage et d'étanchéification, dans laquelle il provoque d'une part la force de serrage par rapport à la conduite de fluide (5) enfichée et est d'autre part serré par sa section d'étanchéification (43) en sollicitant en même temps de manière étanche un bague d'étanchéité (3) reposant au niveau d'une surface extérieure (14), encadrant l'ouverture de fixation (13), de l'élément de support (4), du dispositif de raccordement (1) à ladite surface extérieure (14).

2. Dispositif de raccordement selon la revendication 1, **caractérisé en ce que** la section d'étanchéification (43) est réalisée de telle manière qu'elle vient en prise de manière axiale le long de la bague d'étanchéité (3) radialement à l'extérieur tout en établissant un contact étanche simultanément avec la bague d'étanchéité (3) lorsque l'écrou d'accouplement (28) prend la position de serrage et d'étanchéification et qu'elle repose par sa surface frontale (44) directement au niveau de la surface extérieure (14) encadrant l'ouverture de fixation (13) de l'élément de support (4).

3. Dispositif de raccordement selon la revendication 2, **caractérisé en ce que** la section d'étanchéification (43) présente au niveau de sa périphérie intérieure un évidement (46) disposé de manière concentrique, de forme annulaire et ouvert radialement vers l'intérieur et également en direction de la surface frontale (44) de la section d'étanchéification (43), dans lequel évidement est logée la bague d'étanchéité (3) sous précontrainte avec au moins une partie de son volume, lorsque l'écrou d'accouplement (28) prend la position de serrage et d'étanchéification dans la position d'utilisation du corps de base (16), sachant que l'évidement (46) annulaire est limité de manière appropriée par une surface conique, qui est formée en particulier par un chanfrein de l'écrou d'accouplement (28).

4. Dispositif de raccordement selon l'une quelconque des revendications 1 à 3, **caractérisé en ce que** la bague d'étanchéité (3) est serrée tout en assurant l'étanchéité entre la section d'étanchéification (43) et le corps de base (16) lorsque l'écrou d'accouplement (28) se trouve dans la position de serrage et d'étanchéification.

5. Dispositif de raccordement selon l'une quelconque des revendications 1 à 4, **caractérisé en ce que** la bague d'étanchéité (3) est pressée lorsque le corps de base (16) se trouve dans la position d'utilisation, par la section d'étanchéification (42) de l'écrou d'accouplement (28) prenant la position de serrage et d'étanchéification, tout en assurant l'étanchéité, de manière axiale contre la surface extérieure (14), encadrant l'ouverture de fixation (13), de l'élément de support (4).

6. Dispositif de raccordement selon l'une quelconque des revendications 1 à 5, **caractérisé en ce que** le corps de base (16) comprend, axialement en direction de l'avant, de manière adjacente à la section de fixation (12), une section principale (18) présentant un diamètre extérieur plus grand que celui de la section de fixation (12), dont la surface frontale arrière tournée vers la section de fixation (12) forme une surface étanche (22) annulaire, laquelle fait face lorsque le corps de base (16) se trouve dans la position d'utilisation à la surface extérieure (14) de l'élément de support (4), sachant qu'une bague d'étanchéité (3) du dispositif de raccordement (1), laquelle repose contre les deux surfaces (22, 14) tout en assurant l'étanchéité, est disposée de manière axiale entre la surface étanche (22) de la section principale (18) et la surface extérieure (14) de l'élément de support (4).

7. Dispositif de raccordement selon la revendication 6, **caractérisé en ce que** la bague d'étanchéité (3) coopérant de manière étanche avec la section d'étanchéification (43) de l'écrou d'accouplement (28), lorsque ce dernier se trouve dans la position de serrage et d'étanchéification, est identique à la bague d'étanchéité (3) disposée entre la surface étanche (22) de la section principale (18) et la surface extérieure (14) de l'élément de support (4), de telle manière qu'une seule bague d'étanchéité est présente, laquelle se trouve en contact étanche simultanément avec la surface extérieure (14) de l'élément de support (4), avec le corps de base (16) de l'unité de raccordement (2) et avec la section d'étanchéification (43) de l'écrou d'accouplement (28), lorsque l'écrou d'accouplement (28) prend la position de serrage et d'étanchéification.

8. Dispositif de raccordement selon l'une quelconque des revendications 1 à 7, **caractérisé en ce que** la bague d'étanchéité (3) dotée d'une section de bord (45) extérieure fait saillie radialement vers l'extérieur de la périphérie extérieure (27) du corps de base (16), sachant que ladite section de bord (45) extérieure de la bague d'étanchéité (3) est sollicitée par la section d'étanchéification (43) de l'écrou d'accouplement (28) se trouvant dans la position de serrage et d'étanchéification.

9. Dispositif de raccordement selon l'une quelconque des revendications 1 à 8, **caractérisé en ce que** la section de fixation (12) est une section filetée (12a) réalisée aux fins de la fixation par vissage dans l'ouverture de fixation (13) de l'élément de support (4), sachant que le corps de base (16) présente de manière appropriée axialement dans le raccordement à la section filetée (12a) une section d'attaque pour outil (25) disposant d'une configuration polygonale, au niveau de laquelle il est possible de placer un outil de vissage.

10. Dispositif de raccordement selon l'une quelconque des revendications 1 à 9, **caractérisé en ce que** le corps de base (16) présente un filetage extérieur (24), sur lequel peut être vissé ou est vissé l'écrou d'accouplement (28) avec un filetage intérieur (37).

11. Dispositif de raccordement selon l'une quelconque des revendications 1 à 10, **caractérisé en ce que** l'écrou d'accouplement (28) présente dans la zone de son côté avant opposé de manière axiale à la section d'étanchéification (43) une ouverture de passage (34) axiale, que la conduite de fluide (5) enfichée au niveau de la section d'étanchéification (17) traverse.

12. Dispositif de raccordement selon l'une quelconque des revendications 1 à 11, **caractérisé en ce que** le corps de base (16) est entouré et recouvert dans sa position de base par l'écrou d'accouplement (28) se trouvant dans la position de serrage et d'étanchéification en partant de l'ouverture de passage (34) de manière axiale jusqu'à la surface extérieure (14), encadrant l'ouverture de fixation (13), de l'élément de support (4).

13. Dispositif de raccordement selon l'une quelconque des revendications 1 à 12, **caractérisé en ce que** la section de raccordement (17) du corps de base (16) présente une tubulure emboîtable (17a) faisant saillie axialement, sur laquelle la conduite de fluide (5) devant être raccordée peut être emboîtée, sachant que l'écrou d'accouplement (28) présente au niveau de sa périphérie intérieure une surface de serrage (38) annulaire, qui se trouve à la hauteur axiale d'une tubulure emboîtable (17a) lorsqu'elle prend la position de serrage et d'étanchéification et ce faisant peut solliciter par serrage la surface périphérique extérieure (42) de la conduite de fluide (5) emboîtée dans la tubulure emboîtable (17a) tout en assurant de manière simultanée un contact étanche.

14. Dispositif de raccordement selon la revendication 13 en lien avec la revendication 12, **caractérisé en ce que** la surface de serrage (38) annulaire est réalisée sur la périphérie intérieure de l'ouverture de passage (34).

15. Dispositif de raccordement selon la revendication 13 ou 14, **caractérisé en ce que** la tubulure emboîtable (17a) présente au niveau de sa périphérie intérieure au moins une partie faisant saillie de retenue (26) annulaire présentant en particulier un contour de type dent, et **en ce que** l'écrou d'accouplement (28) est réalisé de telle manière que sa surface de serrage (38) entoure de manière coaxiale la partie faisant saillie de retenue (26) au moins au nombre de une en atteignant la position de serrage et d'étanchéification de sorte que la conduite de fluide (5) peut être serrée de manière radiale entre la surface de serrage (38) et la partie faisant saillie de retenue (26) au moins au nombre de une.

16. Dispositif de raccordement selon l'une quelconque des revendications 1 à 15, **caractérisé en ce que** l'écrou d'accouplement (28) est réalisé d'un seul tenant.

17. Dispositif de raccordement selon l'une quelconque des revendications 1 à 16, **caractérisé en ce qu'**il présente au moins une unité de raccordement (2), un élément de support (4) présentant l'ouverture de fixation (13) et la surface extérieure (14) et au moins une bague d'étanchéité (3) disposée ou devant être disposée entre l'unité de raccordement (2) et l'élément de support (4).
